(19) Europäisches Patentamt / European Patent Office / Office européen des brevets

(11) **EP 2 748 241 B1**

(12) **EUROPEAN PATENT SPECIFICATION**

(45) Date of publication and mention of the grant of the patent:
**18.07.2018 Bulletin 2018/29**

(21) Application number: **12750752.3**

(22) Date of filing: **22.08.2012**

(51) Int Cl.:
*C08J 9/28* *(2006.01)*        *C08G 18/76* *(2006.01)*
*C08J 9/14* *(2006.01)*        *C08G 18/42* *(2006.01)*
*C08G 18/40* *(2006.01)*       *C08G 18/48* *(2006.01)*
*C08G 18/50* *(2006.01)*       *C08L 71/00* *(2006.01)*
*C08G 18/10* *(2006.01)*

(86) International application number:
**PCT/EP2012/066330**

(87) International publication number:
**WO 2013/030061 (07.03.2013 Gazette 2013/10)**

(54) **EMULSIONS AND THEIR USE IN THE PRODUCTION OF FOAMS BASED ON ISOCYANATES**

EMULSIONEN UND DEREN VERWENDUNG BEI DER HERSTELLUNG VON SCHÄUMEN AUF ISOCYANATBASIS

ÉMULSIONS ET LEUR UTILISATION DANS LA PRODUCTION DES MOUSSES BASÉES SUR DES ISOCYANATES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 DE 102011081621**
**14.02.2012 EP 12155275**

(43) Date of publication of application:
**02.07.2014 Bulletin 2014/27**

(73) Proprietor: **Covestro Deutschland AG**
**51373 Leverkusen (DE)**

(72) Inventors:
• **ALBERS, Reinhard**
  **51375 Leverkusen (DE)**
• **HEINEMANN, Torsten**
  **42799 Leichlingen (DE)**
• **VOGEL, Stephanie**
  **40764 Langenfeld (DE)**
• **HEIDELMANN, Thomas**
  **51373 Leverkusen (DE)**
• **OTTO, Frank**
  **40724 Hilden (DE)**

(74) Representative: **Levpat**
**c/o Covestro AG**
**Gebäude 4825**
**51365 Leverkusen (DE)**

(56) References cited:
WO-A1-2005/090432        GB-A- 2 365 436
JP-A- 2003 042 653        US-A- 5 223 549
US-A- 6 071 978           US-B1- 6 316 513

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to stable emulsions for the production of foams based on isocyanates, comprising at least three polyols **A1a**, **A1b** and **A1c** and at least one physical blowing agent **T,** wherein **A1a** is a polyether polyol, obtained by the addition of epoxies to starter compounds selected from carbohydrates and difunctional or higher-functional alcohols, **A1b** is a polyether polyol started on an aromatic amine and **A1c** is a polyester polyether polyol, obtained by the addition of epoxies to the esterification product of an aromatic dicarboxylic acid derivative and a difunctional or higher-functional alcohol. The invention further relates to a method for producing foams by reactions of such emulsions with isocyanates and to the foams obtainable in this way and their use for insulating purposes.

It is known that in the production of foams from an isocyanate component and an isocyanate-reactive component containing polyol(s) using a physical blowing agent, it has a positive influence on the insulating effect of the foam to be produced if the physical blowing agent is emulsified in the isocyanate-reactive composition in the form of fine droplets. This positive influence on the insulating effect of the foam to be produced is caused by the fact that the droplets of emulsion that are formed act as nucleating agents for the subsequent foaming process. The more droplets that exist and the finer these droplets are, the more cells there are in the subsequent foam and above all the smaller the cells are. This fact has a direct influence on the insulating properties of the foam obtained in this way, since the smaller the foam cells that are formed, the better these properties are. Good insulating properties are reflected in a low thermal conductivity. The difficulty with the manufacture and processing of such emulsions is their stability, however. This stability is defined by the non-separation of polyol formulation and physical blowing agent on simple storage of such an emulsion under normal conditions with no additional external loading over a period of several hours to days, through to loading via temperature influences and increased pressure and influences of shear forces. Only emulsions that offer precisely this stability at least under normal conditions but preferably also under conditions involving temperature change, pressure changes and/or shear forces are thus of relevance in industry. These maturing processes are generally counteracted by means of a dramatic increase in viscosity up to a doubling of the viscosity of the liquid polyol phase. Since however the processing of emulsions is in any case made more difficult by their non-Newtonian behaviour, excessive rises in viscosity are undesirable.

EP 0 905 160 A1 describes stable emulsions containing blowing agent and incorporating polyether alcohols having a functionality greater than 1.5 and a hydroxyl value of 10 to 100 mg KOH/g as reactive emulsion stabilisers (see paragraph [0014]) in the polyol component for producing rigid foams based on isocyanates (see paragraph [0001]). The emulsions contain polyether alcohols, which are produced by the addition of low alkylene oxides, preferably ethylene oxide and/or propylene oxide, to OH- and/or NH-functional starter substances, for example sugar alcohols and aromatic amines (see paragraph [0025]). Polyester alcohols produced from polyfunctional carboxylic acids and polyfunctional alcohols are preferably also added to the polyether alcohols (see paragraph [0026]). The blowing agent is emulsified in the polyol mixture and a stable emulsion is obtained (see paragraph [0021]). The blowing agent can however also be added to the polyol mixture in or just in front of the mixing head. The specific combination of the three polyols **A1a, A1b** and **A1c** mentioned in the introduction is however not disclosed in this document. In particular, no polyester polyether polyols are disclosed.

US 2002/0169228 A1 claims a phase-stable polyol mixture comprising a propylene oxide-polyether polyol co-started with sucrose and dipropylene, a polyester polyol and a hydrocarbon having 4 to 6 carbon atoms as blowing agent, which is phase-stable for at least 24 hours (cf. claim 1). A polypropylene oxide-polyether polyol having an OH functionality of between 3.5 and 4.5 started with toluene diamine can additionally also be added to the mixture (see paragraph [0020]). The polyester polyol is started with phthalic anhydride (cf. claim 3) and is preferably STEPANPOL 2352, which is based on phthalic anhydride and diethylene glycol (see paragraph [0022]). Cyclopentane can be used as the blowing agent (see paragraph [0029]), which is either present in the polyol mixture in the form of a microemulsion (see paragraph [0006]), is added to the polyol mixture just in front of the mixing head or is fed to the mixing head as a separate stream (see paragraph [0027]). The polyol mixture is reacted with an organic polyisocyanate to form a polyurethane foam (cf. claim 17). The term "microemulsion" within the meaning of this application implies that the blowing agent is *dissolved* in the polyol mixture; see paragraph [0006]. This also becomes clear in paragraph [0013], where it is disclosed that the polyol mixture is no longer classed as phase-stable if it has a "cloudy appearance". The statement that the polyol composition has to remain phase-stable *for at least 24 hours* (see paragraph [0006]) suggests that the term "microemulsion" is used erroneously in this application. A true microemulsion is in the state of a thermodynamic minimum and is thus stable *indefinitely,* provided that the composition and temperature do not change. Unlike such *micro*emulsions, emulsions are above all temperature-sensitive but also substance-sensitive. Heating and then subsequently cooling them to the starting temperature generally leads to an irreversible change in the disperse structure, which can cause the emulsion to break. Therefore maintaining the stability of a "true" emulsion as in the present invention is considerably more difficult than in the case of "microemulsions".

The application US 2002/0169228 A1 refers consistently to the *solution* of the blowing agent in the polyol mixture. According to this document all factors adversely affecting the solubility of the blowing agent should be avoided, which is why only propylene oxide is used in the production of the polyether polyols (see paragraph [0018]).

WO 00/24813 A1 describes the production of rigid polyurethane foams for the thermal insulation of refrigerators, for example (page 1, lines 3 to 5). The foams consist of organic polyisocyanates, a polyol mixture comprising polyether and/or polyester polyols, a blowing agent and further auxiliary agents and additives (cf. claim 1). The blowing agent consisting of cyclopentane and water is dispersed in the polyol mixture (cf. claim 1). The polyether polyols are produced by addition polymerisation of a polyhydroxyl alcohol with polyethylene oxide and/or propylene oxide (page 4, lines 11 to 15) and preferably have 3 to 6 OH groups (page 5, lines 13 to 15). Glycerol, sorbitol, sucrose and aromatic amines for example can be used as polyhydroxyl alcohols (page 5, lines 1 to 3 and 6 to 7). The polyester polyol can be produced from dicarboxylic anhydrides (e.g. phthalic anhydride) and diols (e.g. diethylene glycol) (page 5, lines 16 to 31) and preferably has two functional groups (page 6, lines 4 to 6). Polyether polyols started on aromatic amines are disclosed in this document in the comparative examples ("polyol K"). In these comparative examples pentane is dissolved and not emulsified in the polyol component (cf. Table 1 on p. 13). The content of polyol K is relatively high, at 40% (comparative example 1) and 50% (comparative example 2) respectively, relative to all polyols present.

None of the aforementioned prior art documents discloses an isocyanate-reactive composition, in which a physical blowing agent **T** is dispersed in a mixture comprising the polyols **A1a, A1b** and **A1c** mentioned in the introduction such that a stable emulsion (to be distinguished from both a solution and a microemulsion) is obtained, and without the viscosity of the isocyanate-reactive composition being increased too greatly in comparison with common, completely dissolved isocyanate-reactive compositions.

Taking account of the information set out above, the present invention provides an emulsion comprising

(I) an isocyanate-reactive composition **A,** containing a polyol mixture **A1** consisting of at least three polyols **A1a, A1b** and **A1c** as the continuous phase
and

(II) at least one, preferably precisely one, physical blowing agent **T** as the disperse phase,
wherein:

(i) **A1a** is a polyether polyol having a hydroxyl value from 15 mg KOH/g to 550 mg KOH/g, preferably from 50 mg KOH/g to 500 mg KOH/g, particularly preferably from 100 mg KOH/g to 450 mg KOH/g, and having a functionality from 1.5 to 6.0, preferably from 2.0 to 5.5, particularly preferably from 2.5 to 5.0, obtained by the addition of an epoxy to one or more starter compound(s) selected from the group consisting of carbohydrates and difunctional or higher-functional alcohols, preferably difunctional or higher-functional alcohols having vicinal hydroxyl groups;

(ii) **A1b** is a polyether polyol having a hydroxyl value from 100 mg KOH/g to 550 mg KOH/g, preferably from 200 mg KOH/g to 500 mg KOH/g, particularly preferably from 350 mg KOH/g to 470 mg KOH/g, and having a functionality from 1.5 to 5.0, preferably from 2.0 to 4.5, particularly preferably from 2.5 to 4.0, obtained by the addition of an epoxy to an aromatic amine;

(iii) **A1c** is a polyester polyether polyol having a hydroxyl value from 100 mg KOH/g to 450 mg KOH/g, preferably from 150 mg KOH/g to 400 mg KOH/g, particularly preferably from 200 mg KOH/g to 400 mg KOH/g, and having a functionality from 1.5 to 3.5, preferably from 1.5 to 3.0, particularly preferably from 1.8 to 2.8, obtained by the addition of an epoxy to the esterification product of an aromatic dicarboxylic acid derivative and a difunctional or higher-functional alcohol wherein

polyol **A1b** is present in the isocyanate-reactive composition **A** in an amount of from 5 mass % to 50 mass %, relative to the total mass of the isocyanate-reactive composition **A.**

The use of the word "a" in conjunction with components according to the invention such as for example certain polyols shall not be understood within the meaning of this application as a numerical value. Expressions such as "a polyol" or similar thus only mean "precisely one (=1) polyol" if that is expressly stated. It is conceivable for example for there to be two polyols of the type **A1a.**

An *"emulsion"* within the context of the present invention is understood to be a finely divided mixture of two liquids, in which one liquid (namely the physical blowing agent **T**) is dispersed in the other liquid (namely the polyol mixture **A1**) in the form of fine droplets showing an average size $\geq 0,1\ \mu m$ to $\leq 20\ \mu m$, the droplet size being determined by using an optical microscope operating in bright field transmission mode. Such an emulsion is different from both a true solution and a microemulsion. Microemulsions have such a finely divided disperse phase that light is no longer refracted. Such microemulsions therefore appear clear and transparent in the visible light range, whereas emulsions within the meaning of the present invention appear cloudy and exhibit strong light refraction. Moreover, microemulsions can be produced *only* with the aid of emulsifying aids, whereas although the use of emulsifying aids in the production of the emulsions according to the invention is not excluded in principle, it is not absolutely necessary and is therefore not preferred. According to this invention, the droplet size of the blowing agent T is preferably ≥ 0,1 μm to ≤ 15 μm and more preferred ≥ 1 μm to ≤ 15 μm. The size is determined via an optical microscope using bright field transmission microscopy. Suitable layer thicknesses for the optical inspection of the specimen are 20 μm to 40 μm.

*"Physical blowing agents"* within the context of the present invention are understood to be compounds that by virtue of their physical properties are highly volatile and do not react with the isocyanate component.

The *"hydroxyl value"* indicates the amount of potassium hydroxide in milligrams that is equivalent to the amount of acetic acid bound by the acetylation of one gram of substance. In the context of the present invention it is determined in accordance with the standard DIN 53240 in the December 1971 version.

*"Functionality"* within the context of the present invention refers to the theoretical functionality calculated from the known substances used and the proportions thereof.

The present invention also provides a method for producing a polyurethane-containing polymer **C,** in which an isocyanate component **B** is reacted with an emulsion according to the invention.

A *"polyurethane-containing polymer C"* is understood here to denote both polymers containing exclusively polyurethane groups (PUR groups) and polymers that additionally contain urea and/or polyisocyanurate groups (PIR groups).

The present invention also provides the polyurethane polymers **C** obtainable in this way and their use for insulating purposes.

Surprisingly it has been found that through the combination according to the invention of polyols **A1a, A1b** and **A1c,** the total viscosity of the isocyanate-reactive composition and hence also the total viscosity of the emulsion can be lowered in comparison to isocyanate-reactive compositions (polyol mixtures) of the prior art that form a solution with the physical blowing agent. It has moreover been found that the stability of the emulsions according to the invention can be increased markedly by the optimisation of certain parameters (such as the content of oxyethylene groups in the polyols used). Furthermore, the thermal conductivity values achieved can be improved through the right combination of optimised polyol emulsions with suitable NCO-terminated prepolymers.

These and other findings are described below by reference to various embodiments and examples of the present invention, wherein the individual embodiments can be freely combined with one another provided that the converse is not clearly indicated from the context.

The production of the polyols **A1a** to **A1c** that can be used according to the invention (and optionally of further polyols, see below) is known in principle to the person skilled in the art and has already been described many times. Polyester polyols are obtained by polycondensation of dicarboxylic acid equivalents and low-molecular-weight polyols. Polyether polyols are obtained by polyaddition (anionic or cationic) of epoxies to suitable starter compounds. The addition of epoxies to polyester polyols leads to the polyester polyether polyols according to the invention. The polymerisation reactions are performed if necessary in the presence of suitable catalysts known to the person skilled in the art.

In preferred embodiments the polyether polyol **A1a** is started on sucrose, mixtures of sucrose and propylene glycol, mixtures of sucrose and ethylene glycol, mixtures of sucrose, propylene glycol and ethylene glycol, sorbitol or mixtures of sorbitol and glycerol. Preferred epoxies are 1,2-butylene oxide, 2,3-butylene oxide, ethylene oxide and propylene oxide, individually or in mixtures. Ethylene oxide and propylene oxide, which can be used individually or both together, are particularly preferred, wherein in the latter case both a random distribution of the oxyalkylene units derived from the ethylene oxide and propylene oxide and a selective production of block copolymers of a specific structure are conceivable. Mixtures of sucrose, propylene glycol and ethylene glycol are particularly preferred as the starter. Exclusively propylene oxide is particularly preferably used as the epoxy. The hydroxyl value of **A1a** is particularly preferably 100 mg KOH/g to 450 mg KOH/g and the functionality 2.5 to 5.

In preferred embodiments the polyether polyol **A1b** is started on ortho-, meta- or para-toluylene diamine or a mixture of isomeric toluylene diamines. ortho-Toluylene diamine is particularly preferably used as the starter. This can be in the form of a mixture of 2,3- and 3,4-isomers. In principle, however, the use of other aromatic amines is also conceivable, such as for example benzene diamine (all isomers) or methylene diphenyl diamine (all isomers). Preferred epoxies are 1,2-butylene oxide, 2,3-butylene oxide, ethylene oxide and propylene oxide, individually or in mixtures. Ethylene oxide and propylene oxide, which can be used individually or both together, are particularly preferred, wherein in the latter case both a random distribution of the oxyalkylene units derived from the ethylene oxide and propylene oxide and a selective production of block copolymers of a specific structure are conceivable. Propylene oxide is particularly preferably used, either alone or in a mixture with ethylene oxide. In the latter case the ratio by mass of propylene oxide to ethylene oxide is 0.25:1 to 4:1, most particularly preferably 0.5:1 to 2:1. In the case of block copolymers they are preferably terminated with propylene oxide.

In preferred embodiments the aromatic dicarboxylic acid derivative used in the production of the polyol **A1c** is a phthalic acid derivative, particularly preferably phthalic anhydride.

Preferred difunctional or higher-functional alcohols used in the production of the polyol **A1c** are ethylene glycol and diethylene glycol including higher homologues thereof, 1,2-propanediol, dipropylene glycol and higher homologues thereof, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol including higher homologues thereof, 2-methyl propanediol-1,3, neopentyl glycol, 3-methyl pentanediol-1,5, glycerol, pentaerythritol, 1,1,1-trimethylolpropane and carbohydrates having 5 to 12 carbon atoms (such as isosorbide for example). Ethylene glycol and diethylene glycol are most particularly preferred.

Epoxies preferably used in the production of the polyol **A1c** are ethylene oxide and propylene oxide. These are used in an amount such that the content of oxyethylene groups is 5 mass % to 50 mass %, preferably 10 mass % to 40 mass %, particularly preferably 15 mass % to 30 mass %, relative to the total mass of the polyol **A1c.**

In certain embodiments the polyol mixture **A1** can also contain further polyols. Thus (iv) a short-chain polyether polyol **A1d** started on an aliphatic amine or a polyhydric alcohol and having a hydroxyl value from 500 mg KOH/g to 1000 mg KOH/g, preferably from 600 mg KOH/g to 950 mg KOH/g, particularly preferably from 700 mg KOH/g to 900 mg KOH/g and a functionality from 1.5 to 5.0, preferably from 2.0 to 4.5, particularly preferably from 2.5 to 4.0, can also be present. **A1d** is particularly preferably obtained from the addition of epoxies to ethylene diamine or trimethylolpropane. Preferred epoxies are ethylene oxide and propylene oxide, with propylene oxide being particularly preferred.

The polyol mixture **A1** can furthermore also contain (v) a difunctional to tetrafunctional amine-type or alcoholic chain extender or crosslinker **A1e. A1e** is preferably selected from glycerol, butanediol, ethylene glycol, diethylene glycol, propylene glycol, ethylene diamine, ethanolamine, triethanolamine, trimethylolpropane and pentaerythritol.

Polyether carbonate polyols **A1f,** such as can be obtained for example by catalytic reaction of epoxies and carbon dioxide in the presence of H-functional starter substances (see for example EP 2 046 861 A1), can additionally also be used in the polyol mixture **A1**. These polyether carbonate polyols generally have a functionality of greater than or equal to 1.0, preferably from 2.0 to 8.0, particularly preferably from 2.0 to 7.0 and most particularly preferably from 2.0 to 6.0. The number-average molar mass is preferably 400 g/mol to 10,000 g/mol and particularly preferably 500 g/mol to 6000 g/mol.

Within the context of this invention the number-average molar mass $M_n$ is determined by gel permeation chromatography in accordance with DIN 55672-1 from August 2007.

The physical blowing agent T is subject to no restrictions in principle, provided that it is not soluble in the polyol mixture **A1** under the prevailing boundary conditions (temperature, pressure) (since an emulsion could not then be produced). The physical blowing agents for use according to the invention are preferably selected from hydrocarbons (e.g. n-pentane, isopentane, cyclopentane, butane, isobutane), ethers (e.g. methylal), halogenated ethers, perfluorinated hydrocarbons having 1 to 8 carbon atoms (e.g. perfluorohexane) and mixtures thereof with one another. In particularly preferred embodiments a pentane isomer or a mixture of various pentane isomers is used as the physical blowing agent **T**. Cyclopentane is exceptionally particularly preferably used as the blowing agent **T.**

In particularly preferred embodiments the emulsion according to the invention contains precisely one each of polyols **A1a, A1b** and **A1c** and, if each is present, precisely one each of polyols **A1d, A1e** and **A1f.** It is furthermore preferable for no further polyols to be present in addition to **A1a, A1b** and **A1c** and, if each is present, **A1d, A1e** and **A1f,** in other words in preferred embodiments the polyol mixture **A1** consists of a maximum of six polyols.

It is generally advantageous for the isocyanate-reactive composition **A** also to contain further components in addition to the polyol mixture comprising **A1**. Such components are known in principle to the person skilled in the art and encompass for example water, foam stabilisers, catalysts, flame retardants and optionally further auxiliary substances and additives. In particularly preferred embodiments the isocyanate-reactive composition **A** additionally comprises

(vi) water **A2;**

(vii) at least one foam stabiliser **A3** selected from the group of polyether-polydimethyl siloxane copolymers, preferably copolymers functionalised with polyether side chains containing propylene oxide and/or ethylene oxide; and

(viii) at least one catalyst **A4** selected from the group

triethylenediamine, N,N-dimethylcyclohexylamine, dicyclohexylmethylamine, tetramethylenediamine, 1-methyl-4-dimethylaminoethyl piperazine, triethylamine, tributylamine, dimethylbenzylamine, N,N',N"-tris-(dimethylaminopropyl)hexahydrotriazine, tris-(dimethylaminopropyl)amine, tris(dimethylaminomethyl)phenol, dimethylaminopropyl formamide, N,N,N',N'-tetramethyl ethylenediamine, N,N,N',N'-tetramethyl butanediamine, tetramethyl hexanediamine, pentamethyl diethylenetriamine, pentamethyl dipropylenetriamine, tetramethyl diaminoethyl ether, dimethyl piperazine, 1,2-dimethyl imidazole, 1-azabicyclo[3.3.0]octane, bis-(dimethylaminopropyl) urea, N-methylmorpholine, N-ethylmorpholine, sodium-N-[(2-hydroxy-5-nonylphenyl)methyl]-N-methylaminoacetate, N-cyclohexyl morpholine, 2,3-dimethyl-3,4,5,6-tetrahydropyrimidine, triethanolamine, diethanolamine, triisopropanolamine, N-methyl diethanolamine, N-ethyl diethanolamine, dimethyl ethanolamine,

together where necessary (if high polyisocyanurate contents are desired) with at least one catalyst selected from the group

tin(II) acetate, tin(II) octoate, tin(II) ethylhexoate, tin(II) laurate, dibutyl tin diacetate, dibutyl tin dilaurate, dibutyl tin maleate, dioctyl tin diacetate, tris-(N,N-dimethylaminopropyl)-s-hexahydrotriazine, tetramethylammonium hydroxide, sodium acetate, sodium octoate, potassium acetate, potassium octoate, sodium hydroxide.

The water fulfils the function of a chemical co-blowing agent, i.e. the reaction with the isocyanate groups releases carbon dioxide, which acts as a blowing agent in addition to **T.**

In order to establish a stable emulsion it is furthermore advantageous to adhere to certain proportions of blowing agent **T** to the polyol mixtures **A1**. In preferred embodiments the invention thus relates to an emulsion in which the mass ratio of **A1:T** is preferably $\geq$ 5:1 to $\leq$ 12:1, more preferably $\geq$ 10:1 to $\leq$ 5:1, most preferably $\geq$ 9:1 to $\leq$ 6:1.

In preferred embodiments of the emulsion according to the invention the components of the isocyanate-reactive composition **A** are present in the following percentages by mass, relative in each case to the total mass of the isocyanate-reactive composition **A:**

Polyol **A1a** from 5 mass % to 60 mass %, preferably from 15 mass % to 50 mass %,

Polyol **A1b** from 5 mass % to 60 mass %, preferably from 10 mass % to 50 mass %,

Polyol **A1c** from 5 mass % to 60 mass %, preferably from 15 mass % to 50 mass %,

Polyol **A1d** from 0 mass % to 20 mass %, preferably from 0 mass % to 15 mass %,

Polyol **A1e** from 0 mass % to 20 mass %, preferably from 0 mass % to 15 mass %,

Polyol **A1f** from 0 mass % to 20 mass %, preferably from 0 mass % to 15 mass %,

Water A2 from 0 mass % to 5 mass %, preferably from 0.5 mass % to 3 mass %,

Foam stabiliser **A3** from 1 mass % to 10 mass %, preferably from 1.5 mass % to 8 mass %,

Catalyst **A4** from 0.5 mass % to 5 mass %, preferably from 1 mass % to 4 mass %.

The emulsion according to the invention preferably contains the polyol mixture **A1** in a percentage by mass of 80 mass % to 90 mass % and the physical blowing agent **T** in a percentage by mass of 10 mass % to 20 mass %, relative in each case to the total mass of the emulsion.

If several representatives of a component are present (e.g. a mixture of two physical blowing agents **T, T1** and **T2**), the aforementioned percentages by mass apply to the sum of the representatives of a component (i.e. in the above example of two physical blowing agents **T,** the sum of the percentages by mass of **T1** and **T2** in the emulsion is 10 mass % to 20 mass %).

In particularly preferred embodiments no further components are present, in other words the emulsion particularly preferably consists at most of **A1a, A1b, A1c, A1d, A1e, A1f, A2, A3, A4** and **T.** The emulsion exceptionally particularly preferably consists of **A1a, A1b, A1c, A2, A3, A4** and **T.**

The production of the emulsions according to the invention preferably takes place in a manner such that the individual components of the polyol mixture **A1** (i.e. at least polyols **A1a, A1b** and **A1c,** optionally further polyols and optionally auxiliary substances and additives as defined above) are mixed together in any order, generally at atmospheric pressure and temperature, and then the blowing agent **T** is added to the polyol mixture A1 thus obtained.

The emulsions may be prepared by mixing the components for **A** in arbitrary order, in general at room temperature and ambient pressure and then adding the blowing agent **T.** The emulsifying may take place using a high shear mixer such as a jet dispergator or a rotor dispergator. Representative examples include those published in Schubert, H. (editor); Emulgiertechnik; R. Behr's Verlag, Hamburg, 2005.

The emulsions according to the invention are characterised by high stability, without this having to be bought at the price of an excessively increased viscosity. *"Stable"* is understood to mean here that the emulsion can be stored for at least 2 hours, preferably for at least 1 day, particularly preferably for at least 3 days, most particularly preferably for at least 5 days, at room temperature and under normal pressure, without a phase separation of the polyol mixture

A1 and blowing agent T occurring. The viscosity of the polyol mixture A1 according to the invention at 25 °C of $\geq$ 1000 mPas to $\leq$ 18000 mPas, particularly preferably $\geq$ 1500 mPas to $\leq$ 12000 mPas and most particularly preferably $\geq$ 2000 mPas to $\leq$ 12000 mPas. The viscosity is determined in accordance with EN ISO 3219 in the October 1994 version.

The invention also provides a method for producing a polyurethane-containing polymer C, in which an isocyanate component B is reacted with an emulsion according to the invention comprising the polyol mixture A1 and a physical blowing agent T. The production of polyurethane-containing polymers from isocyanate components and isocyanate-reactive components in the presence of blowing agents and optionally further auxiliary substances and additives is known in principle to the person skilled in the art and has already been described many times. The polyurethane-containing polymers C are preferably produced by methods known to the person skilled in the art. Examples are described in US 2,764,565, in G. Oertel (Ed.) "Kunststoff-Handbuch", Volume VII, Carl Hanser Verlag, 3rd edition, Munich 1993, p. 267 to 354, and in K. Uhlig (Ed.) "Polyurethan Taschenbuch", Carl Hanser Verlag, 2nd edition, Vienna 2001, p. 83 to 102. Foaming of the components to form the polyurethane-containing polymer C can take place in principle in the manner known from the prior art cited by way of example.

In preferred embodiments of the method according to the invention the isocyanate component B is

a) at least one isocyanate B1 selected from the group consisting of
toluylene diisocyanate, diphenylmethane diisocyanate, polyphenyl polymethylene polyisocyanate (PMDI), xylylene diisocyanate, naphthylene diisocyanate, hexamethylene diisocyanate, diisocyanatodicyclohexylmethane and isophorone diisocyanate,

or

b) an isocyanate-terminated prepolymer B2 produced from at least one polyisocyanate B1 and at least one isocyanate-reactive compound selected from at least one of the polyols A1a, A1b, A1c, A1d and A1f,

or

c) a mixture of B1 and B2.

The reaction of the isocyanate component B with the emulsion A is preferably performed at isocyanate indexes from 95 to 180, preferably from 95 to 150, particularly preferably from 100 to 130. The "isocyanate index" is understood to be the quotient of the amount of isocyanate groups actually used [mol] and the amount of isocyanate groups stoichiometrically required for the complete reaction of all isocyanate-reactive groups [mol], multiplied by 100. Since one mol of an isocyanate group is required for the reaction of one mol of an isocyanate-reactive group,

$$\text{Isocyanate index} = (\text{mols of isocyanate groups} \, / \, \text{mols of isocyanate-reactive groups}) \cdot 100$$

The present invention also provides the polyurethane-containing polymers C obtainable by the method according to the invention described above. Such polyurethane-containing polymers C can be produced by continuous and discontinuous processing methods and are particularly suitable for use as insulating materials.

Discontinuously produced polyurethane-containing polymers C are moulded foams, which are delimited on both the top and bottom by décor layers. Metals, plastics, wood and paper inter alia are suitable as décor layers. Areas of application for such discontinuously produced PUR composite elements that can be cited in particular are the industrial insulation of appliances such as refrigerators, freezers, combined refrigerator-freezers and water heaters, chill containers and cool boxes and also pipes.

Continuously produced polyurethane-containing polymers C are continuously produced PUR foam blocks of defined width and variable thickness, which are preferably delimited on both the top and bottom by décor layers. In certain areas of application (in construction for example), it is however also possible to dispense completely with décor layers. Metals, metal foils, plastics, wood and paper are primarily suitable as décor layers. Areas of application for such continuously produced polyurethane-containing polymers C that can be cited in particular are the industrial insulation of cold stores and thermal insulation in the building sector.

The use of polyurethane-containing polymers in these areas is known in principle to the person skilled in the art and has already been described many times. The polyurethane-containing polymers C according to the invention are exceptionally suitable for these purposes, as they are characterised by low thermal conductivity values, without there being any risk of processing problems in the production of the foams or in their application on suitable substrates (such as refrigerator housings or pipes) due to excessively high viscosities.

## Examples

The invention is intended to be illustrated in more detail by the examples below.

*Materials used*

| | |
|---|---|
| Polyol 1: | Polyether polyol having a hydroxyl value of 450 mg KOH/g, a theoretical functionality of 4.7 and a viscosity of 15,000 mPas at 25°C; |
| Polyol 2: | Polyether polyol having a hydroxyl value of 460 mg KOH/g, a theoretical functionality of 4.0 and a viscosity of 8000 mPas at 25°C; |
| Polyol 3: | Aromatic polyether ester polyol having a hydroxyl value of 300 mg KOH/g, a theoretical functionality of 2.0 and a viscosity of 6500 mPas at 25°C, produced by the reaction of phthalic anhydride with diethylene glycol and subsequent ethoxylation; |
| Polyol 4: | Polyether polyol having a hydroxyl value of 550 mg KOH/g, a theoretical functionality of 3.0 and a viscosity of 505 mPas at 25°C, produced by the reaction of a trifunctional starter mixture with ethylene oxide; |
| Polyol 5: | Polyether polyol having a hydroxyl value of 380 mg KOH/g, a theoretical functionality of 4.6 and a viscosity of 5350 mPas at 25°C. |
| Polyol 6: | Polyether polyol having a hydroxyl value of 400 mg KOH/g, a theoretical functionality of 4.0 and a viscosity of 26,500 mPas at 25°C. |
| Polyol 7: | Polyether polyol having a hydroxyl value of 112 mg KOH/g, a theoretical functionality of 2.0 and a viscosity of 140 mPas at 25°C. |
| Tegostab B 8491: | Foam stabiliser based on polyether-polydimethyl siloxane copolymers (Evonik) |
| Tegostab B 8476: | Foam stabiliser based on polyether-polydimethyl siloxane copolymers (Evonik) |
| Desmorapid 726b: | Amine catalyst (Bayer MaterialScience AG) |
| Desmorapid PV: | Amine catalyst (Bayer MaterialScience AG) |
| Polycat 41: | Amine catalyst (Air Products) |
| Isocyanate 1: | Desmodur® 44 V 20 L, mixture of 4,4'-diphenylmethane diisocyanate (MDI) and higher-functional homologues (PMDI) with a viscosity at 25°C of $\geq$ 160 mPas to $\leq$ 300 mPas; Bayer MaterialScience AG. |
| Isocyanate 2: | NCO prepolymer based on Desmodur® 44 V 20 L and polyol 3 with a residual NCO content of 28.9% and a viscosity of 550 mPas at 25°C. |

*Performance and analysis of the experiments*

The polyols were placed in a reaction vessel in accordance with the corresponding formulation (cf. Table 1). The required amounts of additives such as water, catalysts and stabilisers were weighed in individually. Finally cyclopentane as the blowing agent was weighed in, and all components were homogenised for 60 s at 4200 rpm using a standard laboratory stirrer.

The quality of the emulsion was assessed immediately after production by a specialist operator. To this end a drop of the emulsion was applied to a slide and covered with a cover glass. The transmission of the emulsion was estimated by the operator against a backlight. The finer the droplet size and the more homogeneous and narrower their size distribution, the more transparent the examined samples were against a backlight. All samples according to the invention could be clearly recognised as emulsions; complete transparency as in a true solution or a microemulsion was not observed.

Only freshly prepared emulsions (examples 2 to 13) and solutions (example 1, comparison) were processed to make PUR-containing polymers (rigid PUR foams). There was a difference in time of less than one hour between production of the emulsion and its processing. The emulsions and solutions obtained as described above were mixed together using a standard laboratory stirrer at 4200 rpm, reacted and introduced into a mould. The raw material temperature of the isocyanate-reactive composition A including the blowing agent T and of the isocyanate component B was 20°C; the mould temperature was 40°C. The moulded foams produced in this way were analysed with regard to their core density and thermal conductivity.

The freshly prepared emulsions were stored at 20°C in order to assess their stability and checked visually every day for phase separation. The quality of an emulsion was evaluated directly after preparation by measuring the droplet size. To this effect, the emulsion was inspected via an optical microscope using bright field transmission microscopy in a layer thickness of the specimen of 20 $\mu$m to 40 $\mu$m. The microscope used was an Axioplan 2 microscope from Zeiss. Average droplet sizes of a non-aged emulsion thus determined were below 10 $\mu$m.

Hydroxyl values (OH values) were determined in accordance with DIN 53240 (December 1971).

Viscosities were determined in accordance with EN ISO 3219 in the October 1994 version.

Thermal conductivity values were determined in accordance with DIN EN 12664 in the May 2001 version and unless otherwise specified were measured at a core temperature of 10°C.

The specified core densities were measured on the cut specimens in order to calculate the thermal conductivity in accordance with DIN EN 12664 in the May 2001 version by determining the corresponding mass.

*Results*

The formulations are listed in Table 1.

The analyses of the emulsions and of the resulting rigid PUR foams are summarised in Table 2.

**Table 1**

| Example | | 1 (cmp) | 2 (inv) | 3 (inv) | 4 (inv) | 5 (inv) | 6 (inv) | 7 (inv) | 8 (inv) | 9 (inv) | 10 (inv) | 11 (inv) | 12 (inv) | 13 (inv) |
|---|---|---|---|---|---|---|---|---|---|---|---|---|---|---|
| Polyol 1 | Parts by wt. | 35 | 50 | 50 | 50 | 50 | 25 | 25 | 25 | 25 | 35 | 35 | 20 | 20 |
| Polyol 2 | Parts by wt. | 0 | 25 | 25 | 25 | 25 | 25 | 25 | 25 | 25 | 20 | 20 | 20 | 20 |
| Polyol 3 | Parts by wt. | 0 | 25 | 25 | 25 | 25 | 50 | 50 | 50 | 50 | 30 | 30 | 30 | 30 |
| Polyol 4 | Parts by wt. | 0 | 0 | 0 | 0 | 0 | 0 | 0 | 0 | 0 | 15 | 15 | 30 | 30 |
| Polyol 5 | Parts by wt. | 35 | 0 | 0 | 0 | 0 | 0 | 0 | 0 | 0 | 0 | 0 | 0 | 0 |
| Polyol 6 | Parts by wt. | 25 | 0 | 0 | 0 | 0 | 0 | 0 | 0 | 0 | 0 | 0 | 0 | 0 |
| Polyol 7 | Parts by wt. | 5 | 0 | 0 | 0 | 0 | 0 | 0 | 0 | 0 | 0 | 0 | 0 | 0 |
| Water | Parts by wt. | 2.4 | 2 | 2 | 1.5 | 1.5 | 2 | 2 | 1.5 | 1.5 | 2 | 1.5 | 1.5 | 1.5 |
| Tegostab B8476 | Parts by wt. | 0 | 2 | 2 | 2 | 2 | 2 | 2 | 2 | 2 | 2 | 2 | 2 | 2 |
| Tegostab B8491 | Parts by wt. | 1.5 | 0 | 0 | 0 | 0 | 0 | 0 | 0 | 0 | 0 | 0 | 0 | 0 |
| Desmorapid 726b | Parts by wt. | 3.5 | 1.5 | 1.5 | 1.5 | 1.5 | 0.5 | 0.5 | 0.6 | 0.6 | 0.8 | 0.8 | 1.2 | 1.2 |
| Polycat 41 | Parts by wt. | 0.4 | 0.4 | 0.4 | 0.4 | 0.4 | 0.4 | 0.4 | 0.4 | 0.4 | 0.4 | 0.4 | 0.4 | 0.4 |
| Desmorapid PV | Parts by wt. | 0.9 | 0.5 | 0.5 | 0.5 | 0.5 | 0.5 | 0.5 | 0.5 | 0.5 | 0.5 | 0.5 | 0.5 | 0.5 |
| Cyclopentane | Parts by wt. | 15.8 | 14.4 | 15.0 | 16.8 | 17.5 | 13.1 | 13.3 | 14.5 | 15.6 | 14.1 | 15.6 | 15.3 | 16.4 |
| Isocyanate 1 | Parts by wt. | 150 | 143 | 0 | 135 | 0 | 134 | 0 | 125 | 0 | 145 | 137 | 141 | 0 |
| Isocyanate 2 | Parts by wt. | 0 | 0 | 155 | 0 | 146 | 0 | 145 | 0 | 136 | 0 | 0 | 0 | 153 |
| Isocyanate index | (NCO/OH) · 100 | 115 | 110 | 110 | 110 | 110 | 110 | 110 | 110 | 110 | 110 | 110 | 110 | 110 |
| (cmp = comparative experiment, inv = experiment according to the invention) | | | | | | | | | | | | | | |

**Table 2**

| Example | | 1 (cmp) | 2 (inv) | 3 (inv) | 4 (inv) | 5 (inv) | 6 (inv) | 7 (inv) | 8 (inv) | 9 (inv) | 10 (inv) | 11 (inv) | 12 (inv) | 13 (inv) |
|---|---|---|---|---|---|---|---|---|---|---|---|---|---|---|
| Viscosity [a] | mPa s | 5066 | 7050 | 7050 | 7352 | 7352 | 5793 | 5793 | 6547 | 6494 | 4571 | 4758 | 2848 | 2848 |
| Content of oxyethylene groups [b] | mass % | 0 | 10.8 | 10.8 | 10.7 | 10.6 | 15.0 | 15.0 | 15.0 | 14.9 | 17.4 | 17.2 | 24.2 | 23.9 |
| Homogeneity of emulsion | qualitative [c] | 6 | 2 | 2 | 2 | 2 | 1 | 1 | 1 | 1 | 2 | 2 | 2 | 2 |
| Stability of emulsion | d | [d] | 5 | 5 | 5 | 5 | 6 | 6 | 8 | 8 | 7 | 7 | 3 | 3 |
| Free density | kg/m$^3$ | 23 | 24 | 25 | 25 | 25 | 25 | 26 | 25 | 27 | 25 | 25 | 25 | 25 |
| Core density | kg/m$^3$ | 29 | 32 | 33 | 32 | 33 | 32 | 32 | 32 | 32 | 32 | 33 | 32 | 33 |
| Thermal conductivity (at 10°C) | mW m$^{-1}$K$^{-1}$ | 20.1 | 18.9 | 18.3 | 18.3 | 18.5 | 18.3 | 18.5 | 18.5 | 18.4 | 19.1 | 18.9 | 19.1 | 19.1 |

[a] of the isocyanate-reactive composition **A** without cyclopentane at 25°C; [b] of the emulsion; [c] 1 = very good, 2 = good, 3 = satisfactory, 4 = adequate, 5 = deficient, 6 = unsatisfactory; [d] not applicable as the blowing agent is dissolved and not emulsified.

Comparative example 1 illustrates a latest-generation formulation that meets the current requirements for insulating materials in the area of application of refrigerators for example. This has already explicitly been optimised to obtain low thermal conductivity values. It is a soluble formulation in which the amount of physical blowing agent used is completely dissolved in the polyol mixture. Positive influences of an emulsion on the nucleating effect of the droplets can thus be excluded completely in this comparison. The comparison is admissible, however, as the reaction profiles of example 1 match those of the subsequent emulsion foamings. Furthermore, comparable density levels were used in the production of the rigid PUR foams.

In all further examples 2 to 13 according to the invention, homogeneous and stable emulsions were foamed with a diisocyanate based on MDI. In comparison to example 1, all PUR foams produced in this way have much lower thermal conductivity values. The thermal conductivity was lowered by between 1 and 1.8 mW $m^{-1}K^{-1}$. Surprisingly, this clear improvement in thermal conductivity was achieved despite the simultaneous rise in core density of up to 4 kg/m$^3$.

Examples 3, 5, 7, 9 and 13 confirm that the foaming of the emulsions according to the invention with the prepolymer isocyanate 2 likewise leads to an improvement in the thermal conductivity that is comparable to that achieved with isocyanate 1. In the case of example 3, the thermal conductivity was able to be improved by a further 0.6 mW $m^{-1}K^{-1}$ by replacing isocyanate 1 with isocyanate 2.

Tables 1 and 2 confirm that with the aid of emulsions the thermal conductivity of PUR foams can clearly be improved in comparison to a common soluble polyol formulation. Factors influencing the degree of this improvement are the water content, the viscosity and the content of oxyethylene groups in the polyol formulation. Thus the emulsions shown in examples 10 to 13 lead to a lowering of the thermal conductivity by only 1.0 to 1.2 mW $m^{-1}K^{-1}$ (albeit associated with a lowering of the viscosity, which is advantageous), whereas in the case of examples 3 to 9 the thermal conductivity was consistently lowered by 1.6 to 1.8 mW $m^{-1}K^{-1}$.

While it is true that in examples 2 to 9 an increase in viscosity was observed in comparison with example 1, this is still within acceptable limits. As has already been mentioned, a doubling of the viscosity is not unusual in the prior art, and the systems according to the invention are far removed from that.

All the emulsions listed here exhibited good to very good homogeneity and were stable for several days under normal conditions.

## Claims

1. Emulsion comprising

   (I) an isocyanate-reactive composition **A,** containing a polyol mixture **A1** consisting of at least three polyols **A1a, A1b** and **A1c** as the continuous phase and
   (II) at least one physical blowing agent **T** as the disperse phase,
   wherein:

   (i) **A1a** is a polyether polyol having a hydroxyl value from 15 mg KOH/g to 550 mg KOH/g and a functionality from 1.5 to 6.0, obtained by the addition of an epoxy to one or more starter compound(s) selected from the group consisting of carbohydrates and difunctional or higher-functional alcohols;
   (ii) **A1b** is a polyether polyol having a hydroxyl value from 100 mg KOH/g to 550 mg KOH/g and a functionality from 1.5 to 5.0, obtained by the addition of an epoxy to an aromatic amine;
   (iii) **A1c** is a polyester polyether polyol having a hydroxyl value from 100 mg KOH/g to 450 mg KOH/g and a functionality from 1.5 to 3.5, obtained by the addition of an epoxy to the esterification product of an aromatic dicarboxylic acid derivative and a difunctional or higher-functional alcohol

   wherein
   polyol **A1b** from 5 mass % to 50 mass%, relative to the total mass of the isocyanate-reactive composition **A,** is present in the isocyanate-reactive composition **A.**

2. Emulsion according to claim 1, wherein the the average size of the droplets of the physical blowing agent **T** is $\geq$ 0,1 $\mu$m to $\leq$ 20 $\mu$m, the droplet size being determined by using an optical microscope operating in bright field transmission mode.

3. Emulsion according to claim 1 or 2, wherein the average size of the droplets of the physical blowing agent **T** is $\geq$ 0,1 $\mu$m to $\leq$ 15 $\mu$m, the droplet size being determined by using an optical microscope operating in bright field transmission mode.

4. Emulsion according to claim 1, wherein the polyether polyol **A1a** is a polyether polyol started on sucrose, mixtures of sucrose and propylene glycol, mixtures of sucrose and ethylene glycol, mixtures of sucrose, propylene glycol and ethylene glycol, sorbitol or mixtures of sorbitol and glycerol.

5. Emulsion according to one or more of claims 1 to 4, wherein the polyether polyol **A1b** is a polyether polyol started on ortho-, meta- or para-toluylene diamine or a mixture of isomeric toluylene diamines.

6. Emulsion according to one or more of claims 5, wherein the polyester polyether polyol **A1c** is a polyester polyether polyol obtained by the addition of an epoxy to the esterification product of a phthalic acid derivative with a difunctional or higher-functional alcohol selected from the group consisting of
1,2-propanediol, dipropylene glycol and higher homologues thereof, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol including higher homologues thereof, 2-methyl propanediol-1,3, neopentyl glycol, 3-methyl pentanediol-1,5, glycerol, pentaerythritol, 1,1,1-trimethylolpropane and carbohydrates having 5 to 12 carbon atoms.

7. Emulsion according to one or more of claims 1 to 6, wherein the polyol mixture **A1** additionally comprises:

(iv) a polyether polyol **A1d** started on an aliphatic amine or a polyhydric alcohol and having a hydroxyl value from 500 mg KOH/g to 1000 mg KOH/g and a functionality from 1.5 to 5.0.

8. Emulsion according to one or more of claims 1 to 7, wherein the polyol mixture **A1** additionally comprises:

(v) a difunctional to tetrafunctional amine-type or alcoholic chain extender or crosslinker.

9. Emulsion according to one or more of claims 1 to 8, wherein the physical blowing agent **T** is selected from at least one member of the group consisting of
hydrocarbons, halogenated ethers and perfluorinated hydrocarbons having 1 to 8 carbon atoms.

10. Emulsion according to one of claims 1 to 9, wherein the isocyanate-reactive composition **A** additionally comprises

(vi) water **A2**;
(vii) at least one stabiliser **A3** selected from the group of polyether-polydimethyl siloxane copolymers; and
(viii) at least one catalyst **A4** selected from the group consisting of
triethylenediamine, N,N-dimethylcyclohexylamine, dicyclohexylmethylamine, tetramethylenediamine, 1-methyl-4-dimethylaminoethyl piperazine, triethylamine, tributylamine, dimethylbenzylamine, N,N',N''-tris-(dimethylaminopropyl)hexahydrotriazine, tris-(dimethylaminopropyl)amine, tris(dimethylaminomethyl)phenol, dimethylaminopropyl formamide, N,N,N',N'-tetramethyl ethylenediamine, N,N,N',N'-tetramethyl butanediamine, tetramethyl hexanediamine, pentamethyl diethylenetriamine, pentamethyl dipropylenetriamine, tetramethyl diaminoethyl ether, dimethyl piperazine, 1,2-dimethyl imidazole, 1-azabicyclo[3.3.0]octane, bis-(dimethylaminopropyl) urea, N-methylmorpholine, N-ethylmorpholine, sodium-N-[(2-hydroxy-5-nonylphenyl)methyl]-N-methylaminoacetate, N-cyclohexyl morpholine, 2,3-dimethyl-3,4,5,6-tetrahydropyrimidine, triethanolamine, diethanolamine, triisopropanolamine, N-methyl diethanolamine, N-ethyl diethanolamine and dimethyl ethanolamine.

11. Emulsion according to one or more of claims 1 to 10, wherein the mass ratio of **A1:T** is $\geq$ 5:1 to $\leq$ 12:1.

12. Emulsion according to one or more of claims 1 to 11, wherein the polyol component **A1** has a viscosity according to EN ISO 3219 at 25 °C of $\geq$ 1000 mPas to $\leq$ 18000 mPas.

13. Method for producing a polyurethane-containing polymer C, wherein an isocyanate component **B** is reacted with an emulsion according to one of claims 1 to 12.

14. Method according to claim 13, wherein the isocyanate component **B** is

a) at least one isocyanate **B1** selected from the group consisting of
toluylene diisocyanate, diphenylmethane diisocyanate, polyphenyl polymethylene polyisocyanate, xylylene diisocyanate, naphthylene diisocyanate, hexamethylene diisocyanate, diisocyanatodicyclohexylmethane and isophorone diisocyanate,

or

b) an isocyanate-terminated prepolymer **B2** produced from at least one polyisocyanate **B1** and at least one isocyanate-reactive compound selected from at least one of the following polyols

b.1) polyether polyol having a hydroxyl value from 15 mg KOH/g to 550 mg KOH/g and a functionality from 1.5 to 6.0, obtained by the addition of an epoxy to one or more starter compound(s) selected from carbohydrates and difunctional or higher-functional alcohols (**A1a**);

b.2) polyether polyol having a hydroxyl value from 100 mg KOH/g to 550 mg KOH/g and a functionality from 1.5 to 5.0, obtained by the addition of an epoxy to an aromatic amine (**A1b**);

b.3) polyester polyether polyol having a hydroxyl value from 100 mg KOH/g to 450 mg KOH/g and a functionality from 1.5 to 3.5, obtained by the addition of an epoxy to the esterification product of an aromatic dicarboxylic acid derivative and a difunctional or higher-functional alcohol (**A1c**);

b.4) polyether polyol having a hydroxyl value from 500 mg KOH/g to 1000 mg KOH/g and a functionality from 1.5 to 5.0 (**A1d**);

b.5) polyether carbonate polyol having a functionality of $\geq$ 1.0 to 8.0 and a number-average molar mass from 400 g/mol to 10,000 g/mol (**A1f**),

or

c) a mixture of **B1** and **B2**.

**15.** Method according to claim 13 or 14, wherein the reaction of the isocyanate component **B** with the emulsion is performed at isocyanate indexes of 95 to 130.

**16.** Polyurethane-containing polymer **C,** obtainable by a method according to one or more of claims 13 to 15.

**17.** Use of a polyurethane-containing polymer **C** according to claim 16 as an insulating material.

**Patentansprüche**

**1.** Emulsion, umfassend

(I) eine Isocyanat-reaktive Zusammensetzung **A,** die ein Polyolgemisch **A1** enthält, das aus mindestens drei Polyolen **A1a, A1b** und **A1c** als kontinuierliche Phase besteht und
(II) mindestens ein physikalisches Treibmittel **T** als disperse Phase, wobei:

(i) **A1a** ein Polyetherpolyol mit einem Hydroxylwert von 15 mg KOH/g bis 550 mg KOH/g und einer Funktionalität von 1,5 bis 6,0 ist, das durch die Zugabe eines Epoxids zu einer oder mehreren Starterverbindungen erhalten wurde, die aus der Gruppe bestehend aus Kohlenhydraten und difunktionalen oder höherfunktionalen Alkoholen ausgewählt sind;

(ii) **A1b** ein Polyetherpolyol mit einem Hydroxylwert von 100 mg KOH/g bis 550 mg KOH/g und einer Funktionalität von 1,5 bis 5,0 ist, das durch die Zugabe eines Epoxids zu einem aromatischen Amin erhalten wurde;

(iii) **A1c** ein Polyesterpolyetherpolyol mit einem Hydroxylwert von 100 mg KOH/g bis 450 mg KOH/g und einer Funktionalität von 1,5 bis 3,5 ist, das durch die Zugabe eines Epoxids zu dem Veresterungsprodukt eines aromatischen Dicarboxylsäurederivats und eines difunktionalen oder höherfunktionalen Alkohols erhalten wurde;

wobei

das Polyol **A1b** von 5 Masseprozent bis 50 Masseprozent, bezogen auf die Gesamtmasse der Isocyanat-reaktiven Zusammensetzung **A,** in der Isocyanat-reaktiven Zusammensetzung **A** vorhanden ist.

**2.** Emulsion nach Anspruch 1, wobei die Durchschnittsgröße der Tröpfchen des physikalischen Treibmittels **T** $\geq$ 0,1 $\mu$m bis $\leq$ 20 $\mu$m ist, wobei die Tröpfchengröße mithilfe eines optischen Mikroskops bestimmt wird, das im Hellfeldtransmissionsmodus arbeitet.

3. Emulsion nach Anspruch 1 oder 2, wobei die Durchschnittsgröße der Tröpfchen des physikalischen Treibmittels **T** $\geq 0{,}1$ µm bis $\leq 15$ µm ist, wobei die Tröpfchengröße mithilfe eines optischen Mikroskops bestimmt wird, das im Hellfeldtransmissionsmodus arbeitet.

4. Emulsion nach Anspruch 1, wobei das Polyetherpolyol **A1a** ein Polyetherpolyol ist, das auf Saccharose, Gemischen aus Saccharose und Propylenglykol, Gemischen aus Saccharose und Ethylenglykol, Gemischen aus Saccharose, Propylenglykol und Ethylenglykol, Sorbit oder Gemischen aus Sorbit und Glycerin gestartet wurde.

5. Emulsion nach einem oder mehreren der Ansprüche 1 bis 4, wobei das Polyetherpolyol **A1b** ein Polyetherpolyol ist, das auf ortho-, meta- oder para-Toloylendiamin oder einem Gemisch aus isomerischen Toluylendiaminen gestartet wurde.

6. Emulsion nach einem oder mehreren der Ansprüche 5, wobei das Polyesterpolyetherpolyol **A1c** ein Polyesterpolyetherpolyol ist, das durch die Zugabe eines Epoxids zu dem Veresterungsprodukt eines Phthalsäurederivats mit einem difunktionalen oder höherfunktionalen Alkohol erhalten wurde, der aus der Gruppe bestehend aus 1,2-Propandiol, Dipropylenglykol und höheren Homologen davon, 1,3-Propandiol, 1,4-Butandiol, 1,5-Pentandiol, 1,6-Hexandiol, 1,7-Heptandiol, 1,8-Oktandiol, 1,9-Nonandiol, 1,10-Dekandiol, 1,11-Undekandiol, 1,12-Dodekandiol einschließlich höherer Homologe davon, 2-Methylpropandiol-1,3, Neopentylglykol, 3-Methylpentandiol-1,5, Glycerin, Pentaerythritol, 1,1,1-Trimethylolpropan und Kohlenhydraten mit 5 bis 12 Kohlenstoffatomen ausgewählt ist.

7. Emulsion nach einem oder mehreren der Ansprüche 1 bis 6, wobei das Polyolgemisch **A1** zusätzlich umfasst:

   (iv) ein Polyetherpolyol **A1d,** das auf einem aliphatischen Amin oder polyhydrischen Alkohol gestartet wurde und einen Hydroxylwert von 500 mg KOH/g bis 1000 mg KOH/g und eine Funktionalität von 1,5 bis 5,0 aufweist.

8. Emulsion nach einem oder mehreren der Ansprüche 1 bis 7, wobei das Polyolgemisch **A1** zusätzlich umfasst:

   (v) einen difunktionalen bis tetrafunktionalen aminartigen oder alkoholischen Kettenverlängerer oder - vernetzer.

9. Emulsion nach einem oder mehreren der Ansprüche 1 bis 8, wobei das physikalische Treibmittel **T** aus mindestens einem Element der Gruppe bestehend aus Kohlenwasserstoffen, halogenierten Ethern und perfluorierten Kohlenwasserstoffen mit 1 bis 8 Kohlenstoffatomen ausgewählt ist.

10. Emulsion nach einem oder mehreren der Ansprüche 1 bis 9, wobei die Isocyanat-reaktive Zusammensetzung **A** zusätzlich umfasst:

    (vi) Wasser **A2;**
    (vii) mindestens einen Stabilisator **A3,** der aus der Gruppe bestehend aus Polyether-Polydimethylsiloxan-Copolymeren ausgewählt ist;
    und
    (viii) mindestens einen Katalysator **A4,** der aus der Gruppe bestehend aus

    Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris(dimethylaminopropyl)hexahydrotriazin, Tris-(dimethylaminopropyl)amin, tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis(dimethylaminopropyl)harnstoff, N-Methylmorpholin, N-Ethylmorpholin, Natrium-N-(2-hydroxy-5-nonylphenyl)methyl]-N-methylaminoacetat, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und Dimethylethanolamin ausgewählt ist.

11. Emulsion nach einem oder mehreren der Ansprüche 1 bis 10, wobei das Massenverhältnis **A1:T** $\geq 5{:}1$ bis $\leq 12{:}1$ ist.

12. Emulsion nach einem oder mehreren der Ansprüche 1 bis 11, wobei die Polyolkomponente **A1** eine Viskosität gemäß EN ISO 3219 bei 25 °C von $\geq 1000$ mPas bis $\leq 18000$ mPas aufweist.

**13.** Verfahren zum Herstellen eines Polyurethan-enthaltenden Polymers **C,** wobei eine Isocyanatkomponente **B** mit einer Emulsion nach einem der Ansprüche 1 bis 12 reagiert wird.

**14.** Verfahren nach Anspruch 13, wobei die Isocyanatkomponente **B** ist:

a) mindestens ein Isocyanat **B1,** das aus der Gruppe bestehend aus Toluylendiisocyanat, Diphenylmethandiisocyanat, Polyphenylpolymethylenpolyisocyanat, Xylylendiisocyanat, Naphthylendiisocyanat, Hexamethylendiisocyanat, Diisocyanatodicyclohexylmethan und Isophorondiisocyanat ausgewählt ist,
oder
b) ein Isocyanat-endständiges Präpolymer **B2,** das aus mindestens einem Polyisocyanat **B1** und mindestens einer Isocyanat-reaktiven Verbindung hergestellt wird, die aus mindestens einem der folgenden Polyole ausgewählt ist:

b.1) Polyetherpolyol mit einem Hydroxylwert von 15 mg KOH/g bis 550 mg KOH/g und einer Funktionalität von 1,5 bis 6,0, das durch die Zugabe eines Epoxids zu einer oder mehreren Starterverbindungen erhalten wurde, die aus Kohlenhydraten und difunktionalen oder höherfunktionalen Alkoholen **(A1a)** ausgewählt sind;
b.2) Polyetherpolyol mit einem Hydroxylwert von 100 mg KOH/g bis 550 mg KOH/g und einer Funktionalität von 1,5 bis 5,0, das durch die Zugabe eines Epoxids zu einem aromatischen Amin **(A1b)** erhalten wurde;
b.3) ein Polyesterpolyetherpolyol mit einem Hydroxylwert von 100 mg KOH/g bis 450 mg KOH/g und einer Funktionalität von 1,5 bis 3,5, das durch die Zugabe eines Epoxids zu dem Veresterungsprodukt eines aromatischen Dicarboxylsäurederivats und eines difunktionalen oder höherfunktionalen Alkohols **(A1c)** erhalten wurde;
b.4) Polyetherpolyol mit einem Hydroxylwert von 500 mg KOH/g bis 1000 mg KOH/g und einer Funktionalität von 1,5 bis 5,0 **(A1d);**
b.5) Polyethercarbonatpolyol mit einer Funktionalität von $\geq$ 1,0 bis 8,0 und einer Zahlenmittel-Molmasse von 400 g/mol bis 10.000 g/mol **(A1f)**,
oder

c) ein Gemisch aus **B1** und **B2.**

**15.** Verfahren nach Anspruch 13 oder 14, wobei die Reaktion der Isocyanatkomponente **B** mit der Emulsion bei einem Isocyanatindex von 95 bis 130 durchgeführt wird.

**16.** Polyurethan-enthaltendes Polymer **C,** das mittels eines Verfahrens nach einem oder mehreren der Ansprüche 13 bis 15 erhalten werden kann.

**17.** Verwendung eines Polyurethan-enthaltenden Polymers **C** nach Anspruch 16 als Isoliermaterial.

**Revendications**

**1.** Émulsion comprenant :

(I) une composition A réagissant avec les isocyanates, contenant un mélange de polyols A1 constitué d'au moins trois polyols A1a, A1b et A1c comme phase continue ;
et
(II) au moins un agent gonflant physique T comme
phase dispersée,
dans laquelle :

(i) A1a est un polyéther polyol ayant un indice d'hydroxyle de 15 mg KOH/g à 550 mg KOH/g et une fonctionnalité de 1,5 à 6,0, obtenu par addition d'un époxyde à un ou plusieurs composés de départ sélectionnés dans le groupe constitué de glucides et d'alcools difonctionnels ou à fonctionnalité plus élevée ;
(ii) A1b est un polyéther polyol ayant un indice d'hydroxyle de 100 mg KOH/g à 550 mg KOH/g et une fonctionnalité de 1,5 à 5,0, obtenu par addition d'un époxyde à une amine aromatique ;
(iii) A1c est un polyester-polyéther polyol ayant un indice d'hydroxyle de 100 mg KOH/g à 450 mg KOH/g et une fonctionnalité de 1,5 à 3,5, obtenu par addition d'un époxyde au produit d'estérification d'un dérivé d'acide dicarboxylique aromatique et d'un alcool difonctionnel ou à fonctionnalité plus élevée ;

dans laquelle
le polyol A1b est présent dans une quantité de 5 % massique à 50 % massique relativement à la masse totale de la composition A réagissant avec les isocyanates, dans la composition A réagissant avec les isocyanates.

2. Émulsion selon la revendication 1, dans laquelle la taille moyenne des gouttelettes de l'agent gonflant physique T est de $\geq 0,1\ \mu m$ à $\leq 20\ \mu m$, la taille des gouttelettes étant déterminée à l'aide d'un microscope optique fonctionnant dans le mode transmission en champ clair.

3. Émulsion selon la revendication 1 ou 2, dans laquelle la taille moyenne des gouttelettes de l'agent gonflant physique T est de $\geq 0,1\ \mu m$ à $\leq 15\ \mu m$, la taille des gouttelettes étant déterminée à l'aide d'un microscope optique fonctionnant dans le mode transmission en champ clair.

4. Émulsion selon la revendication 1, dans laquelle le polyéther polyol A1a est un polyéther polyol pour lequel on utilise comme produit de départ du saccharose, des mélanges de saccharose et de propylène glycol, des mélanges de saccharose et d'éthylène glycol, des mélanges de saccharose, de propylène glycol et d'éthylène glycol, du sorbitol, ou des mélanges de sorbitol et de glycérol.

5. Émulsion selon une ou plusieurs des revendications 1 à 4, dans laquelle le polyéther polyol A1b est un polyéther polyol pour lequel on utilise comme produit de départ une ortho-, méta- ou para-toluylènediamine ou un mélange de toluylènediamines isomères.

6. Émulsion selon une ou plusieurs des revendications 5, dans laquelle le polyester-polyéther polyol A1c est un polyester-polyéther polyol obtenu par addition d'un époxyde au produit d'estérification d'un dérivé d'acide phtalique avec un alcool difonctionnel ou à fonctionnalité plus élevée sélectionné dans le groupe constitué de :
1,2-propanediol, dipropylène glycol et homologues de celui-ci à chaîne carbonée plus longue, 1,3-propanediol, 1,4-butanediol, 1,5-pentanediol, 1,6-hexanediol, 1,7-heptanediol, 1,8-octanediol, 1,9-nonanediol, 1,10-décanediol, 1,11-undécanediol, 1,12-dodécanediol y compris homologues de celui-ci à chaîne carbonée plus longue, 2-méthylpropanediol-1,3, néopentylglycol, 3-méthylpentanediol-1,5, glycérol, pentaérythritol, 1,1,1-triméthylolpropane et glucides comportant 5 à 12 atomes de carbone.

7. Émulsion selon une ou plusieurs des revendications 1 à 6, dans laquelle le mélange de polyols A1 comprend en outre :

(iv) un polyéther polyol A1d pour lequel on utilise comme produit de départ une amine aliphatique ou un alcool polyhydrique et ayant un indice d'hydroxyle de 500 mg KOH/g à 1 000 mg KOH/g et une fonctionnalité de 1,5 à 5,0.

8. Émulsion selon une ou plusieurs des revendications 1 à 7, dans laquelle le mélange de polyols A1 comprend en outre :

(v) un agent d'extension de chaîne ou de réticulation aminique ou alcoolique, difonctionnel ou tétrafonctionnel.

9. Émulsion selon une ou plusieurs des revendications 1 à 8, dans laquelle l'agent gonflant physique T est sélectionné parmi au moins un élément du groupe constitué de :
hydrocarbures, éthers halogénés et hydrocarbures perfluorés comportant de 1 à 8 atomes de carbone.

10. Émulsion selon l'une des revendications 1 à 9, dans laquelle la composition A réagissant avec les isocyanates comprend en outre :

(vi) de l'eau A2 ;
(vii) au moins un stabilisant A3 sélectionné dans le groupe constitué de copolymères de polyéther-polydiméthylsiloxane ;
(viii) au moins un catalyseur A4 sélectionné dans le groupe constitué de :
triéthylènediamine, N,N-diméthylcyclohexylamine, dicyclohexylméthylamine, tétraméthylènediamine, 1-méthyl-4-diméthylaminoéthylpipérazine, triéthylamine, tributylamine, diméthylbenzylamine, N,N',N"-tris(diméthylaminopropyl)hexahydrotriazine, tris-(diméthylaminopropyl)amine, tris(diméthylaminométhyl)phénol, diméthylaminopropylformamide, N,N,N',N'-tétraméthyléthylènediamine, N,N,N',N'-tétraméthylbutanediamine, tétraméthylhexanediamine, pentaméthyldiéthylènetriamine, pentaméthyldipropylènetriamine, tétraméthyldiaminoéthyléther, diméthylpipérazine, 1,2-diméthylimidazole, 1-azabicyclo[3.3.0]octane, bis(diméthylaminopropyl)urée, N-méthylmorpholine, N-éthylmorpholine, sodium-N-[(2-hydroxy-5-nonylphényl)méthyl]-N-méthylaminoacétate, N-cyclohexylmorpholine, 2,3-diméthyl-3,4,5,6-tétrahydropyrimidine, triéthanolamine, diéthanolamine, triisopropanolamine, N-méthyldiéthanolamine, N-éthyldiéthanolamine et diméthyléthanolamine.

**11.** Émulsion selon une ou plusieurs des revendications 1 à 10, dans laquelle le rapport massique de A1:T est de ≥ 5:1 à ≤ 12:1.

**12.** Émulsion selon une ou plusieurs des revendications 1 à 11, dans laquelle le constituant polyol A1 a une viscosité selon EN ISO 3219 à 25 °C de ≥ 1 000 mPas à ≤ 18 000 mPas.

**13.** Procédé de fabrication d'un polymère C contenant du polyuréthane, dans lequel on fait réagir un constituant isocyanate B avec une émulsion selon l'une des revendications 1 à 12.

**14.** Procédé selon la revendication 13, dans lequel le constituant isocyanate B est :

a) au moins un isocyanate B1 sélectionné dans le groupe constitué de :
diisocyanate de toluylène, diisocyanate de diphénylméthane, polyisocyanate de polyphénylpolyméthylène, diisocyanate de xylylène, diisocyanate de naphtylène, diisocyanate d'hexaméthylène, diisocyanatodicyclohexylméthane et diisocyanate d'isophorone,
ou
b) un prépolymère B2 à terminaisons isocyanate produit à partir d'au moins un polyisocyanate B1 et d'au moins un composé réagissant avec les isocyanates sélectionné parmi au moins un des polyols suivants :

b.1) polyéther polyol ayant un indice d'hydroxyle de 15 mg KOH/g à 550 mg KOH/g et une fonctionnalité de 1,5 à 6,0, obtenu par addition d'un époxyde à un ou plusieurs composés de départ sélectionnés parmi des glucides et des alcools difonctionnels ou à fonctionnalité plus élevée (A1a) ;
b.2) polyéther polyol ayant un indice d'hydroxyle de 100 mg KOH/g à 550 mg KOH/g et une fonctionnalité de 1,5 à 5,0, obtenu par addition d'un époxyde à une amine aromatique (A1b) ;
b.3) polyester-polyéther polyol ayant un indice d'hydroxyle de 100 mg KOH/g à 450 mg KOH/g et une fonctionnalité de 1,5 à 3,5, obtenu par addition d'un époxyde au produit d'estérification d'un dérivé d'acide dicarboxylique aromatique et d'un alcool difonctionnel ou à fonctionnalité plus élevée (A1c) ;
b.4) polyéther polyol ayant un indice d'hydroxyle de 500 mg KOH/g à 1 000 mg KOH/g et une fonctionnalité de 1,5 à 5,0 (A1d) ;
b.5) polyéther-carbonate polyol ayant une fonctionnalité de ≥ 1,0 à 8,0 et une masse moléculaire moyenne en nombre de 400 g/mol à 10 000 g/mol (A1f),
ou

c) un mélange de B1 et B2.

**15.** Procédé selon la revendication 13 ou 14, dans lequel la réaction du constituant isocyanate B avec l'émulsion est effectuée selon des indices d'isocyanate de 95 à 130.

**16.** Polymère C contenant du polyuréthane, obtenu par un procédé selon une ou plusieurs des revendications 13 à 15.

**17.** Utilisation d'un polymère C contenant du polyuréthane selon la revendication 16 comme matériau isolant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0905160 A1
- US 20020169228 A1
- WO 0024813 A1
- EP 2046861 A1
- US 2764565 A

### Non-patent literature cited in the description

- Emulgiertechnik. R. Behr's Verlag, 2005
- Kunststoff-Handbuch. Carl Hanser Verlag, 1993, vol. VII, 267-354
- Polyurethan Taschenbuch. Carl Hanser Verlag, 2001, 83-102